# EUROPEAN PATENT APPLICATION

(11) **EP 2 011 622 A1**
(43) Date of publication of application: **07.01.2009**
(21) Application number: 07738305.7
(22) Date of filing: 12.03.2007
(51) Int. Cl.: B29C 45/73, G11B 7/26

(54) **DISK MOLDING DIE, MIRROR DISK, AND METHOD OF MANUFACTURING MIRROR DISK**

(30) Priority: 21.04.2006 JP 2006118098
(71) Applicant: SUMITOMO HEAVY INDUSTRIES, LTD., Tokyo 141-6025 (JP); SEIKOH GIKEN CO., LTD., Matsudo-shi, Chiba 270-2214 (JP)
(72) Inventor: SUZUKI, Yasuo, Chiba-shi, Chiba 263-0001 (JP); GOTO, Yoshiyuki, Matsudo-shi, Chiba 270-2214 (JP); YOKOTA, Shouji, Minato-ku, Tokyo 108-0014 (JP)
(74) Representative: Emde, Eric
(86) International application number: PCT/JP2007/054833
(87) International publication number: WO 2007/122899

(57) **Abstract**

An object is to prevent a disk substrate from warping to thereby improve the quality of the disk substrate. A disk molding mold includes a first support plate; a first mirror surface disk attached to the first support plate; a second support plate; and a second mirror surface disk attached to the second support plate and facing the first mirror surface disk. At least one of the first and second mirror surface disks comprises a first plate, and a second plate disposed to surround at least a front surface of the first plate. The first plate comprises a temperature control flow passage (93, 94) formed on a surface thereof facing the first support plate. The second plate comprises a heat insulation section formed on a surface thereof facing the first plate such that the heat insulation section corresponds to the temperature control flow passage (93, 94). Since the distribution of heat in the first and second plates is made uniform, a molding material within a cavity can be cooled uniformly.

## Description

### TECHNICAL FIELD

The present invention relates to a disk molding mold, a mirror surface disk, and a method of manufacturing a mirror surface disk.

### BACKGROUND ART

Conventionally, in an injection molding machine for molding disk substrates, resin melted within a heating cylinder is charged into a cavity in a disk molding mold, and is then cooled and solidified in the cavity so as to obtain a molded disk substrate.

For such a molding process, the above-described injection molding machine includes the disk molding mold consisting of a stationary mold and a movable mold; an injection apparatus for charging resin into a cavity; and a mold-clamping apparatus for bringing the movable mold into contact with the stationary mold or separating the movable mold from the stationary mold. The mold-clamping apparatus is operated so as to advance and retreat the movable mold to thereby close, clamp, and open the disk molding mold. When the disk molding mold is clamped, a cavity is formed between the stationary mold and the movable mold. Notably, a mirror surface disk having a mirror-finished surface is disposed on the side facing the cavity, on each of the stationary mold and the movable mold.

The injection apparatus includes a heating cylinder; an injection nozzle attached to the front end of the heating cylinder; and a screw disposed within the heating cylinder so that the screw can rotate and can advance and retreat.

In a metering step, the screw is rotated, whereby resin is melted and accumulated forward of the screw, and the screw is retreated accordingly. During this period, the disk molding mold is closed and clamped. Subsequently, in an injection step, the screw is advanced, whereby the resin accumulated forward of the screw is injected from the injection nozzle and charged into the cavity. Next, in a cooling step, the resin within the cavity is cooled, whereby a prototype of a disk substrate; i.e., a disk substrate prototype, is formed. Before the resin solidifies completely, punching is performed on the disk substrate prototype, whereby the disk substrate is formed. Subsequently, the disk molding mold is opened, and the disk substrate is removed therefrom.

Incidentally, fine pits and projections are formed on a surface of the disk substrate. Therefore, a stamper is attached to, for example, the mirror surface disk of the stationary mold. A pattern composed of a plurality of pits corresponding to the fine recesses and projections is formed on the stamper, and, as a result of molding, the pattern is transferred to the disk substrate.

In this case, when the mirror surface disk is formed to have heat insulation properties, the pattern transcription performance can be improved, and the molding cycle can be shortened (see, for example, Patent Document 1).
Patent Document 1: Japanese Patent Application Laid-Open (*kokai*) No. 2003-311798

### DISCLOSURE OF THE INVENTION

### PROBLEMS TO BE SOLVED BY THE INVENTION

However, in the above-described conventional disk molding mold, it is difficult to uniformly cool resin within a cavity, and, when a very thin disk substrate is formed, warpage may occur with a resultant decrease in quality of the disk substrate.

An object of the present invention is to solve the above-mentioned problem in the conventional disk molding mold and to provide a disk molding mold, a mirror surface disk, and a method of manufacturing a mirror surface disk, which can prevent a disk substrate from warping, and can improve the quality of the disk substrate.

### MEANS FOR SOLVING THE PROBLEMS

To achieve the above object, a disk molding mold according to the present invention comprises a first support plate; a first mirror surface disk attached to the first support plate; a second support plate; and a second mirror surface disk attached to the second support plate and facing the first mirror surface disk.

At least one of the first and second mirror surface disks includes a first plate, and a second plate disposed to surround at least a front surface of the first plate.

The first plate includes a temperature control flow passage formed on a surface thereof facing the first support plate. The second plate includes a heat insulation section formed on a surface thereof facing the first plate such that the heat insulation section corresponds to the temperature control flow passage.

### EFFECT OF THE INVENTION

According to the present invention, there is provided a disk molding mold which comprises a first support plate; a first mirror surface disk attached to the first support plate; a second support plate; and a second mirror surface disk attached to the second support plate and facing the first mirror surface disk.

At least one of the first and second mirror surface disks includes a first plate, and a second plate disposed to surround at least a front surface of the first plate.

The first plate includes a temperature control flow passage formed on a surface thereof facing the first support plate. The second plate includes a heat insulation section formed on a surface thereof facing the first plate such that the heat insulation section corresponds to the temperature control flow passage.

In this case, since the first plate includes a temperature control flow passage formed on a surface thereof facing the first support plate and the second plate includes a heat insulation section formed on a surface thereof facing the first plate such that the heat insulation section corresponds to the temperature control flow passage, the distribution of heat in the first and second plates is made uniform. Accordingly, a molding material within the cavity can be cooled uniformly. As a result, when a very thin disk substrate is formed, the disk substrate does not warp, whereby the quality of the disk substrate can be improved.

### BRIEF DESCRIPTION OF THE DRAWINGS

FIG. 1 is a sectional view of a mirror surface disk according to an embodiment of the present invention.
FIG. 2 is a sectional view of a disk molding mold according to the embodiment of the present invention.

### DESCRIPTION OF SYMBOLS

10: disk molding mold
15: base plate
16, 36: disk plate
40: intermediate plate
68: void
71, 73: first mold plate
72, 74: second mold plate
93, 94: first and second temperature control flow passages

### BEST MODE FOR CARRYING OUT THE INVENTION

An embodiment of the present invention will next be described in detail with reference to the drawings. In this case, a disk molding mold, which serves as a mold apparatus, will be described.

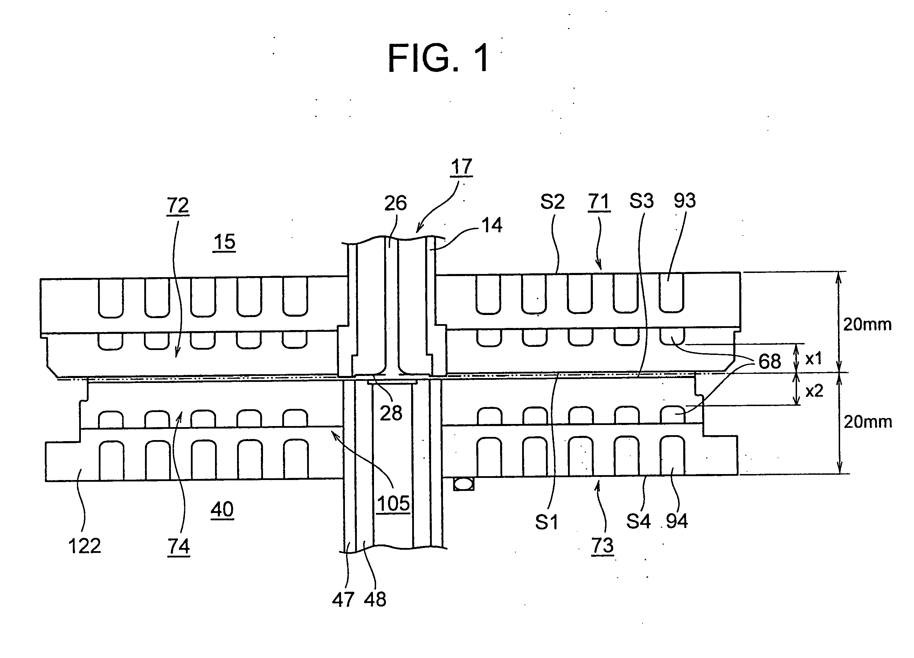

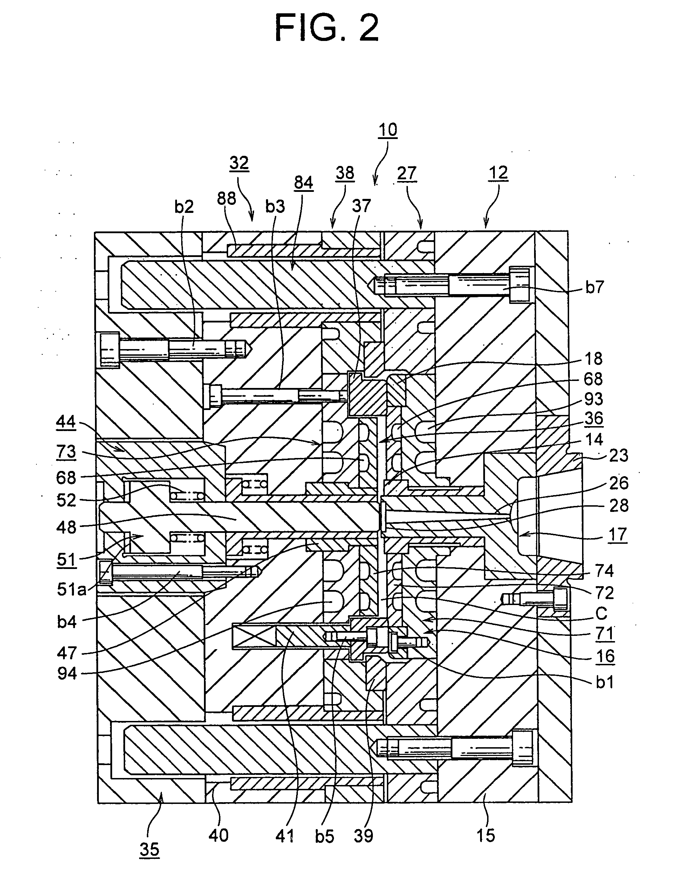

FIG. 1 is a sectional view of a mirror surface disk according to an embodiment of the present invention. FIG. 2 is a sectional view of a disk molding mold according to the embodiment of the present invention.

In these drawings, reference numeral 10 denotes a disk molding mold. The disk molding mold 10 includes a stationary mold (a first mold; a stationary-side mold assembly) 12, and a movable mold (a second mold; a movable-side mold assembly) 32, which is disposed to face the stationary mold 12.

An unillustrated injection apparatus is disposed adjacent to the disk molding mold 10. The injection apparatus includes a heating cylinder (a cylinder member); an injection nozzle (an injection member) attached to the front end of the heating cylinder; a screw disposed within the heating cylinder so that the screw can rotate and can advance and retreat; a metering motor (a drive section for metering) for rotating the screw; an injection motor (a drive section for injection) for advancing and retreating the screw; etc.

An unillustrated mold-clamping apparatus is provided so as to close, clamp, and open the disk molding mold 10. The mold-clamping apparatus includes a stationary platen, which serves as a first holding member for holding the stationary mold 12; a movable platen, which serves as a second holding member for holding the movable mold 32; a base plate which is disposed to face the stationary platen with the movable platen intervening therebetween; a toggle mechanism disposed between the movable platen and the base plate; a mold-clamping motor (a drive section for mold-clamping) for operating the toggle mechanism; etc.

The stationary mold 12 includes a base plate (a first support plate) 15; a disk plate (a first mirror surface disk) 16 having a circular shape and attached to the base plate 15 by means of unillustrated bolts; a locating ring 23 disposed in the base plate 15 in such a manner as to face the stationary platen and adapted to position of the base plate 15 with respect to the stationary platen; and a sprue bush 17 disposed adjacent to the locating ring 23. The base plate 15 and the disk plate 16 function as a first mold main body.

The disk plate 16 includes a first mold plate (a first plate; a lower plate) 71, and a second mold plate (a second plate; an upper plate) 72 disposed to surround at least a front surface of the first mold plate 71. The first mold plate 71 has a function of cooling an unillustrated resin (a molding material) charged into a cavity C. The second mold plate 72 has a function of suppressing excessive lowering of the temperature of the resin and making the temperature of the resin uniform.

The first and second mold plates 71 and 72 are formed of the same metal; in the present embodiment, stainless steel, and are united together by means of diffusion bonding. Notably, the first and second mold plates 71 and 72 may be formed of different materials whose coefficients of thermal expansion are the same. Further, the first and second mold plates 71 and 72 may be used as separate members, without being united.

A die 28 is formed at the front end of the sprue bush 17 so that the die faces the cavity C. A sprue 26 is formed in the sprue bush 17 and communicates with the die 28. Resin injected from the injection nozzle passes through the sprue 26. A stamper-holding bush 14 is disposed radially outward of a front half portion of the sprue bush 17. The stamper-holding bush 14 serves as a holding member for holding an inner circumferential edge of an unillustrated stamper, which serves as a cavity insert. Notably, an unillustrated air blow bush, etc. are also disposed in the stationary mold 12. In the present embodiment, the stamper is disposed on the stationary mold 12 side; however, the stamper may be disposed on the movable mold 32 side.

Further, an annular abutment ring 18 is attached to the outer circumferential edge of the disk plate 16 by means of a bolt b1, and an annular first peripheral ring 27 is disposed on the radially outer side of the disk plate 16 and the abutment ring 18 and attached to the base plate 15. Notably, the disk plate 16 is positioned in relation to the first peripheral ring 27.

The movable mold 32 includes a base plate 35; an intermediate plate (a second support plate) 40 having a circular shape and attached to the base plate 35 by means of a bolt b2; a disk plate (a second mirror surface disk) 36 attached to the intermediate plate 40 by means of a bolt b3; a cylinder 44 which is disposed within the base plate 35 such that the cylinder 44 faces the movable platen and is attached to the intermediate plate 40 by means of a bolt b4; and a cut punch (a member of processing) 48 which is advanced and retreated along the cylinder 44 and has a shape corresponding to the die 28. Notably, the base plate 35, the disk plate 36, and the intermediate plate 40 function as a second mold main body.

The disk plate 36 includes a first mold plate (a first plate; a lower plate) 73, and a second mold plate (a second plate; an upper plate) 74 disposed to surround at least a front surface of the first mold plate 73. The first mold plate 73 has a function of cooling the resin charged into the cavity C. The second mold plate 74 has a function of suppressing excessive lowering of the temperature of the resin and making the temperature of the resin uniform.

The first and second mold plates 73 and 74 are formed of the same metal; in the present embodiment, stainless steel, and are united together by means of diffusion bonding. Notably, the first and second mold plates 73 and 74 may be formed of different materials whose coefficients of thermal expansion are the same. Further, the first and second mold plates 73 and 74 may be used as separate members, without being united.

An annular cavity ring 37 is disposed along the outer circumferential edge of the disk plate 36 and in opposition to the abutment ring 18. A second peripheral ring 38 is disposed radially outward of the disk plate 36 and the cavity ring 37 and in opposition to the first peripheral ring 27, and is attached to the intermediate plate 40. Notably, the disk plate 36 is positioned in relation to the second peripheral ring 38. The cavity ring 37 is attached to a rod 41 by means of a bolt b5, and disposed such that it can move in relation to the intermediate plate 40 via the rod 41. A cavity-ring holder 39 is in engagement with the outer circumferential edge of the cavity ring 37, and is attached to the second peripheral ring 38 by means of an unillustrated bolt. The cavity ring 37 projects from the front end surface of the disk plate 36. The inner circumferential surface of the cavity ring 37 forms the outer circumferential edge of a disc substrate.

In the injection molding machine having the above-described configuration, in a metering step, the screw is rotated, whereby the resin is melted and accumulated forward of the screw, and the screw is retreated. During this operation, the disk molding mold 10 is closed and clamped. Subsequently, in an injection step, the screw is advanced, whereby the resin accumulated forward of the screw is injected from the injection nozzle, and charged into the cavity C. Next, in a cooling step, the resin within the cavity C is cooled, whereby a disk substrate prototype is molded.

Before the resin within the cavity C solidifies completely, punching is performed on the disk substrate prototype, whereby a central hole is formed in the disk substrate.

For such punching operation, a flange 51 formed integrally with the cut punch 48 is disposed within the cylinder 44 such that it can advance and retreat. The rear end 51a of the flange 51 is received by the above-described cylinder 44. Further, a cut-punch return spring 52 is disposed ahead of the flange 51. The cut-punch return spring 52 urges the flange 51 rearward.

When the flange 51 is advanced in a mold clamped state by supply of oil to an unillustrated drive cylinder, the cut punch 48 is caused to advance and enter the die 28. As a result, a center hole can be formed in the disk substrate.

Subsequently, mold opening is performed, and the disk substrate is removed. Notably, an unillustrated ejector bush for ejecting the disk substrate is disposed radially outward of a front half portion of the cut punch 48; and an air blow bush 47 for jetting compressed air to the disk substrate so as to separate the disk substrate from the disk plate 36 is disposed radially outward of the ejector bush. Further, an ejector pin and other components are disposed within the movable mold 32.

Notably, guide posts 84 are attached, through press fitting, to the first peripheral ring 27 such that they are arranged along a circle concentric with the stationary mold 12 and project toward the movable mold 32, and are connected to the base plate 15 by means of bolts b7. Meanwhile, guide bushes 88, which serve as guide members, are attached to the second peripheral ring 38 and the intermediate plate 40. The guide bushes 88 can guide the guide posts 84.

Incidentally, first and second temperature control flow passages 93 and 94 are formed in the disk plates 16 and 36, respectively, in a predetermined pattern, and a temperature control medium of a predetermined temperature from a temperature controller is supplied to the first and second temperature control flow passages 93 and 94, whereby the disk plates 16 and 36 are cooled, and the resin within the cavity C is cooled.

The first temperature control flow passage 93 is formed by forming a spiral groove in the first mold plate 71 such that the groove is open to a surface of the first mold plate 71 facing the base plate 15 and has a predetermined depth, and closing the opening of the groove by the base plate 15. The second temperature control flow passage 95 is formed by forming a spiral groove in the first mold plate 73 such that the groove is open to a surface of the first mold plate 73 facing the intermediate plate 40 and has a predetermined depth, and closing the opening of the groove by the intermediate plate 40.

Since each of the first and second temperature control flow passages 93 and 94 is formed by groove, temperature differences arise in the first mold plates 71 and 73 between respective portions in close proximity to the first and second temperature control flow passages 93 and 94 and respective portions separated away from the first and second temperature control flow passages 93 and 94. If uniform cooling of the resin within the cavity C becomes difficult, when a very thin disk substrate is molded, the disk substrate may warp, with a resultant decrease in the quality of the disk substrate.

In order to cope with such a problem, a heat transmission restraining section for restraining transmission of heat is provided in the vicinity of a surface of the second mold plate 72 facing the first mold plate 71, and void 68, which serves as a heat insulation section, is formed in the heat transmission restraining section. The void 68 is formed by a spiral groove which is formed at the position corresponding to that of the groove constituting the first temperature control flow passage 93 in the same pattern as the first temperature control flow passage 93 to has a predetermined depth. In this case, the void 68 is formed such that the distance x1 between the void 68 and a front surface S1 of the second mold plate 72 is not less than 4 mm but not greater than 12 mm. Notably, when the distance x1 is short, the thickness of the second mold plate 72 as measured to the void 68 is insufficient, so that the strength of the second mold plate 72 decreases, and a sufficient strength against resin pressure cannot be maintained. Accordingly, the distance x1 is desirably at least 4 mm. Further, when the distance x1 is long, the thickness of the second mold plate 72 as measured to the void 68 becomes excessively large, so that the heat capacity of the second mold plate 72 increases. As a result, the cooling performance of the disk molding mold lowers. Moreover, since the distance between the front surface S1 of the second mold plate 72 and a rear surface S2 of the first mold plate 71 is set to 20 mm, if the distance x1 is long, it becomes impossible to sufficiently secure the first temperature control flow passage 93, and the cooling performance lowers. Therefore, the distance x1 is desirably set to 12 mm at the maximum.

Similarly, a heat transmission restraining section for restraining transmission of heat is provided in the vicinity of a surface of the second mold plate 74 facing the first mold plate 73, and the void 68, which serves as a heat insulation section, is formed in the heat transmission restraining section. The void 68 is formed by a spiral groove which is formed at the position corresponding to that of the groove constituting the second temperature control flow passage 94 in the same pattern as the second temperature control flow passage 94 to has a predetermined depth. In this case, the void 68 as formed such that the distance x2 between the void 68 and a front surface S3 of the second mold plate 74 is not less than 4 mm but not greater than 12 mm.

In this case, when the distance x2 is short, the thickness of the second mold plate 74 as measured to the void 68 is insufficient, so that the strength of the second mold plate 74 decreases, and a sufficient strength against resin pressure cannot be maintained. Accordingly, the distance x2 is desirably at least 4 mm. Further, when the distance x2 is long, the thickness of the second mold plate 74 as measured to the void 68 becomes excessively large, so that the heat capacity of the second mold plate 74 increases. As a result, the cooling performance of the disk molding mold lowers. Moreover, since the distance between the front surface S3 of the second mold plate 74 and a rear surface S4 of the first mold plate 73 is set to 20 mm, if the distance x2 is long, it becomes impossible to sufficiently secure the second temperature control flow passage 94, and the cooling performance lowers. Therefore, the distance x2 is desirably set to 12 mm at the maximum.

Accordingly, even when, in the first mold plates 71 and 73, temperature differences arise between respective portions in close proximity to the first and second temperature control flow passages 93 and 94 and respective portions separated away from the first and second temperature control flow passages 93 and 94, the resin within the cavity C can be cooled uniformly. Specifically, the first and second temperature control flow passages 93 and 94 and the cavity C are thermally insulated from each other by the void 68, whereby the transmission of heat therebetween is restrained. Further, portions where the first and second temperature control flow passages 93 and 94 are not formed and the cavity C are not thermally insulated from each other by the void 68, whereby the transmission of heat therebetween is not restrained.

As a result, the distribution of heat within each of the second mold plates 72 and 74 becomes uniform, so that the resin within the cavity C can be cooled uniformly. Consequently, when a very thin disk substrate is molded, the disk substrate hardly warps, and, thus, the quality of the disk substrate can be improved.

In the present embodiment', the void 68 is formed as a heat insulation section, and air is accommodated in the groove. However, the heat insulation section may be formed by filling the entirety or portions of the groove constituting the void 68 with a heat insulating material which is lower in thermal conductivity than the first mold plates 71 and 73. The heat insulating material may be formed by, for example, mixing a metal into resin. In this case, since the first mold plates 71 and 73 are formed of stainless steel and have a thermal conductivity of 25 W/m·°K, the thermal conductivity of the heat insulating material charged into the groove is set to a predetermined value less than 25 W/m·°K by adjusting the amount of the metal mixed into the resin. Notably, the thermal conductivity of air is also smaller than 25 W/m·°K. When the heat insulating material is used, the thermal conductivity can be changed depending on the position along the groove.

In the present embodiment, the second mold plates 72 and 74 each have a flat-plate like shape. However, the second mold plates may be formed to have a box-like shape.

In the present embodiment, the disk plate 16 is composed of the first and second mold plates 71 and 72, and the disk plate 36 is composed of the first and second mold plates 73 and 74. However, the embodiment may be modified such that only one of the disk plates 16 and 36 is composed of the first and second mold plates.

The present invention is not limited to the above-described embodiments. Numerous modifications and variations of the present invention are possible in light of the spirit of the present invention, and they are not excluded from the scope of the present invention.

### INDUSTRIAL APPLICABILITY

The present invention can be applied to a disk manufacturing apparatus for manufacturing disks.

## Claims

1. A disk molding mold comprising:
(a) a first support plate;
(b) a first mirror surface disk attached to the first support plate;
(c) a second support plate; and
(d) a second mirror surface disk attached to the second support plate and facing the first mirror surface disk, wherein
(e) at least one of the first and second mirror surface disks comprises a first plate, and a second plate disposed to surround at least a front surface of the first plate;
(f) the first plate comprises a temperature control flow passage formed on a surface thereof facing the first support plate; and
(g) the second plate comprises a heat insulation section formed on a surface thereof facing the first plate such that the heat insulation section corresponds to the temperature control flow passage.

2. A disk molding mold according to claim 1, wherein the heat insulation section is a void.

3. A disk molding mold according to claim 1, wherein the heat insulation section comprises a thermal conductivity less than 25 W/m·°K.

4. A disk molding mold according to claim 1, wherein the distance between the heat insulation section and a front surface of the second plate is not less than 4 mm but not greater than 12 mm.

5. A mirror surface disk comprising:
(a) a first plate; and
(b) a second plate disposed to surround at least a front surface of the first plate, wherein
(c) the first plate comprises a temperature control flow passage formed on a surface thereof facing a support plate; and
(d) the second plate comprises a heat insulation section formed on a surface thereof facing the first plate such that the heat insulation section corresponds to the temperature control flow passage.

6. A method of manufacturing a mirror surface disk comprising a first plate and a second plate disposed to surround at least a front surface of the first plate, the method comprising the steps of:
(a) forming a temperature control flow passage on a surface of the first plate facing a support plate; and
(b) forming a heat insulation section on a surface of the second plate facing the first plate such that the heat insulation section corresponds to the temperature control flow passage.
